# EUROPÄISCHE PATENTSCHRIFT

(11) **EP 2 209 619 B1**
(45) Veröffentlichungstag und Bekanntmachung des Hinweises auf die Patenterteilung: **11.12.2019**
(21) Anmeldenummer: 08850259.6
(22) Anmeldetag: 31.10.2008
(51) Int. Cl.: B32B 7/12, B32B 27/08, B32B 33/00, C08J 5/12, C09J 5/06, C08G 18/70, B32B 37/12, C08G 18/79

(54) **LATENTREAKTIVE KLEBSTOFFE FÜR IDENTIFIKATIONS-DOKUMENTE**
LATENT REACTIVE ADHESIVES FOR IDENTIFICATION DOCUMENTS
ADHÉSIFS AYANT UNE RÉACTIVITÉ LATENTE POUR DES DOCUMENTS D'IDENTIFICATION

(30) Priorität: 13.11.2007 DE 102007054046
(43) Veröffentlichungstag der Anmeldung: 28.07.2010
(73) Patentinhaber: Covestro Deutschland AG, 51373 Leverkusen (DE)
(72) Erfinder: PUDLEINER, Heinz, 47800 Krefeld (DE); BUECHNER, Joerg, 51467 Bergisch Gladbach (DE); YESILDAG, Mehmet-Cengiz, 51377 Leverkusen (DE); MEYER, Klaus, 41539 Dormagen (DE); KRAUS, Harald, 51371 Leverkusen (DE)
(74) Vertreter: Levpat
(86) Internationale Anmeldenummer: PCT/EP2008/009194
(87) Internationale Veröffentlichungsnummer: WO 2009/062602

(56) Entgegenhaltungen:
- EP-A- 0 444 259
- EP-A- 0 922 720
- EP-A- 0 949 310
- EP-A- 1 600 485
- WO-A-93/25599
- DE-A1- 19 631 283

## Beschreibung

Die vorliegende Erfindung betrifft ein Identifikationsdokument aufweisend Schicht A), B) und C), wobei A) ein Thermoplast ist, B) eine Schicht hergestellt aus einem lagerstabilen, latent-reaktiven Klebstoff ist, und C) ein Thermoplast ist.

Bei der Herstellung von PC-(Polycarbonat-) basierten Identifikations-Dokumenten (ID-Dokumente) ergibt sich das Problem, das komplexe (elektronische) Bauteile aber auch diffraktive Strukturen (u.a. Hologramme) während der Lamination zerstört werden, sofern sie nicht elastisch verpackt sind. Bislang umgeht man das Problem damit, in unmittelbarer Umgebung des Bauteils entweder verfüllte Kavitäten zu schaffen oder thermoelastische / thermoplastische Pufferlagen (z.B. thermo-plastisches Polyurethan, TPU) einzusetzen. Diese "weiche" Einlagerung soll den mechanischen Stress während der Lamination mindern. Aufgrund der chemisch andersartigen Natur dieser Materialien stellen sie prinzipiell einen Fremdkörper und damit einen Schwachpunkt in Hochsicherheitsdokumenten dar.

Bei der Einbringung elektronischer Bauteile, insbesonderere Integrated Circuits (IC oder Chip), in Polycarbonat-(PC-) basierte Dokumente ergibt sich bei gedünnten Halbleiterstrukturen das Problem der vorzeitigen Zerstörung des Bauteils während der Lamination. Bei der einschlägig bekannten Fertigung von PC-smart-cards über die Laminierung einzelner Folien-Lagen kommt es dazu, dass direkt über dem Chip eine PC-Folie positioniert ist. Bei der industriell etablierten Vorgehensweise werden die vorbereiteten Kartenaufbauten und gleichzeitiger Einwirkung von Temperatur und Druck zu einem "quasi-monolithischen" Block zusammengepresst. Da PC aufgrund seines spezifischen Wärmeübergangskoeffizienten nicht sofort erweicht, herrscht direkt am Chip einer erhöhter Druck, der in den meisten Fällen zur mechanischen Zerstörung führt.

Werden auf die elektronischen Bauteile selbstklebende Folien aufgebracht, so können die gewünschten Elemente durchaus zu einer Karte zusammengefügt werden. In der Regel sind aber diese Adhäsivlagen ein Schwachpunkt des Kartenaufbaus: Über die Kartenkante können leichter Wasserdampf und Luft hinein diffundieren und somit zu einer nachträglichen Delamination führen. Auch andere Umwelteinflüsse, insbesondere Temperatur (-wechsel) können dazu führen, dass die Karte aufgespaltet und damit nicht mehr brauchbar wird.

Latent reaktive Klebstoffe sind an sich bekannt, z: aus der EP-A-0 922 720. Grundsätzlich liegen bei Latent reaktiven Klebstoffe zwei feste Phasen vor, z.B. als Mischung zweier Stoffe als zwei Arten Kristalle, die daher bei Raumtemperatur oder normalen Umgebungsbedingungen nicht miteinander reagieren. Erst bei Aktivierung, z.B. durch Erhitzen, reagieren die Stoffe chemisch miteinander.

In DE 31 12 054, DE 32 28 723 und DE 32 28 724 werden pulverförmige, feinteilige feste Polyisocyanate mit Teilchendurchmessern bis 150 µm oberflächlich desaktiviert. Durch die Oberflächenbeschichtung behalten die Polyisocyanate ihren Isocyanatgehalt und ihre Reaktivität und bilden ein stabiles Einkomponentensystem auch in Wasser oder wässerigen Lösungsmitteln.

Im DE 32 28 724 und DE 32 30 757 werden oberflächendesaktivierte pulverförmige Diisocyanate mit Polyolen und wässerigen Dispersionspolymeren, die funktionelle Gruppen enthalten zu einer lagerstabilen reaktiven Paste kombiniert. Durch Aufheizen dieser wasserhaltigen Paste auf 140°C, d.h. über die Reaktionstemperatur des Polyisocyanates vernetzen diese beiden Komponenten und es wird ein leicht angeschäumter elastischer Belag erhalten.

Ein Verfahren zur Herstellung stabiler Dispersionen feinteiliger oberflächendesaktivierten Isocyanate wird in DE 35 17 333 beschrieben. Die resultierenden stabilen Dispersionen eignen sich als Vernetzungsmittel.

Eine Verwendung der wässerigen Dispersionen von oberflächendesaktivierten festen, feinteiligen Polyisocyanaten als Vernetzer in Textilpigmentdruckpasten und Färbeflotten wird in DE 35 29 530 dargelegt. Im Anschluss an den Applikationsvorgang werden die Textilpigmentdruckpasten und Färbeflotten mit Heißluft oder Dampf auf dem Gewebe fixiert. DE 196 31 283 A1 (ORGA KARTENSYSTEME GMBH) ist ein Stand der Technik für die Konfiguration als Datenträgerkarte in Form eines Kunststoff-Kartenlaminats für Ausweiskarten, Bankkarten, Kreditkarten, Zugangsberechtigungskarten für Mobilfunknetze (GSM- Karten), Krankenversichertenkarten, Telefonkarten mit Chip- und/oder Magnetstreifenkarte und aus wässrigen Polyester-Polyurethan-Elastomer-Dispersionen mit einem polyfunktionalen Isocyanat-Vernetzer hergestellte Klebebeschichtungen.

Nachteil dieser in diesen Dokumenten beschriebenen Systeme ist jedoch, dass die Arbeitsschritte Applikation und Aushärten bzw. Vernetzen nicht getrennt werden können, was sowohl aus ökonomischen wie logistischen Gründen bei einer Vielzahl von Anwendungen wünschenswert erscheint.

So würde ein Substrat mit latent reaktivem Klebstoff, das eine lagerstabile latent-reaktive Schicht oder Pulver trägt die Möglichkeit eröffnen, an dem Ort aufgetragen zu werden, an dem die entsprechenden Gerätschaften vorhanden sind, eine vorbestimmbare Zeitspanne gelagert zu werden und anschließend zu dem Ort transportiert zu werden, an dem die Verarbeitung zu weiteren Zwischenprodukten oder zum Endprodukt erfolgt.

Lagerstabile, latent-reaktive Massen oder Schichten werden in WO 93/25599 beschrieben. Diese bestehen aus isocyanatreaktiven Polymeren, die einen Schmelzpunkt über 40°C aufweisen und oberflächendesaktivierten Polyisocyanaten. Zur Herstellung des Gemisches werden die Komponenten auf Temperaturen aufgeschmolzen, die wesentlich über dem Erweichungspunkt des Polymeren liegen. Der apparative Aufwand für die Herstellung und die Applikation dieser Massen sind neben den Energiekosten erheblich. Zudem können in diesem Systemen aus Stabilitäts- und Verarbeitungsgründen nur oberflächendesaktivierte Polyisocyanate verwendet werden, die eine Vernetzungstemperatur von über 80°C aufweisen. Weiterhin ist eine gezielte und kontrollierte inhomogene Vermischung der Komponenten Gegenstand der Anmeldung. Diese erfordert jedoch aufwendige Arbeitsschritte.

Der Erfindung liegt daher die Aufgabe zugrunde, neue Identifikationsdokumente mit verbessertem Sicherheitsverhalten und Verfahren zu ihrer Herstellung zur Verfügung zu stellen. Insbesondere soll das Delaminationsverhalten verbessert werden.

Erfindungsgemäß wird diese Aufgabe gelöst durch ein Identifikationsdokument aufweisend Schicht A), B) und C), wobei A) ein Thermoplast ist, B) eine Schicht hergestellt aus einem lagerstabilen, latent-reaktiven Klebstoff ist, und C) ein Thermoplast ist, dadurch gekennzeichnet, dass der Klebstoff eine wässrige Dispersion aufweist, die ein Di- oder Polyisocyanat mit Schmelz- bzw. Erweichungstemperatur von > 30°C und ein Isocyanat-reaktives Polymer enthält, wobei das Isocyanat-reaktive Polymer ein Polyurethan ist, das aus kristallisierenden Polymerketten aufgebaut ist, welche bei Messung mittels TMA bei Temperaturen unter +110°C partiell oder vollständig dekristallisieren.

Identifikationsdokument bedeutet im Rahmen der vorliegenden Erfindung ein mehrschichtiges flächenförmiges Dokument mit Sicherheitsmerkmalen wie Chips, Fotografien, biometrischen Daten etc. Diese Sicherheitsmerkmale können von außen sichtbar oder zumindest abfragbar sein. Normalerweise ist hat das Identifikationsdokument eine Größe zwischen der einer Scheckkarte oder einem Reisepass. Das Identifikationsdokument kann auch Teil eines Dokumentes aus mehreren Teilen sein, wie z.B. ein Identifikationsdokument aus Kunststoff in einem Reisepass, der auch Papier- oder Pappanteile enthält.

In einer erfindungsgemäßen Ausführungsform betrifft die vorliegende Erfindung ein solches Identifikationsdokument, dadurch gekennzeichnet, dass der Klebstoff eine wässrige Dispersion aufweist, die ein Di- oder Polyisocyanat mit Schmelz- bzw. Erweichungstemperatur von > 30°C und ein mit Isocyanat-reaktives Polymer enthält.

In einer weiteren Ausführungsform betrifft die vorliegende Erfindung ein solches Identifikationsdokument, dadurch gekennzeichnet, dass der Klebstoff eine wässrige Dispersion mit einer Viskosität von mindestens 2000 mPas enthält.

In einer weiteren Ausführungsform betrifft die vorliegende Erfindung ein solches Identifikationsdokument, dadurch gekennzeichnet, dass das Isocyanat-reaktive Polymer Polyurethan ist, das aus kristallisierenden Polymerketten aufgebaut sind, welche bei Messung mittels thermomechanischer Analyse (TMA) bei Temperaturen unter +90°C partiell oder vollständig dekristallisieren. Die Messung mittels TMA wird analog zu ISO 11359 Teil 3 "Bestimmung der Penetrationstemperatur" durchgeführt.

In einer weiteren Ausführungsform betrifft die vorliegende Erfindung ein solches Identifikationsdokument, dadurch gekennzeichnet, dass das Di- oder Polyisocyanat ausgewählt ist aus der Gruppe bestehend aus Dimerisierungsprodukt, Trimerisierungsprodukt und Harnstoff-Derivate des TDI bzw. IPDI.

In einer weiteren Ausführungsform betrifft die vorliegende Erfindung ein solches Identifikationsdokument, dadurch gekennzeichnet, dass eine Klebeverbindung hergestellt wird, indem auf dem zu verklebenden Substrat eine Dispersion gemäß des Anspruchs 1 aufgetragen und anschließend getrocknet wird, und der getrocknete Klebstoffauftrag durch kurzzeitiges, vorzugsweise weniger als 5 Minuten andauerndes Erwärmen auf T> 65°C, bevorzugt auf eine Temperatur von 80°C < T < 110°C dekristallisiert und im dekristallisierten Zustand mit dem zu verbindenden Substrat gefügt wird.

Thermoplast bedeutet im Rahmen der vorliegenden Erfindung einen polymerketten aufweisenden thermoplastischen Kunststoff wie z.B. Polycarbonat, Polymethylmethacrylat (PMMA), Poly- oder Copolymere mit Styrol wie beispielhaft und vorzugsweise transparentes Polystyrol (PS) oder Polystyrolacrylnitril (SAN), transparente thermoplastische Polyurethane, sowie Polyolefine, wie beispielhaft und vorzugsweise transparente Polypropylentypen oder Polyolefine auf der Basis von cyclischen Olefinen (z. B. TOPAS®, Topas Advanced Polymers), Poly- oder Copolykondensate der Terephthalsäure, wie beispielhaft und vorzugsweise Poly- oder Copolyethylenterephthalat (PET oder CoPET) oder glycol-modifiziertes PET (PETG), Polyethylenglykolnaphthenat (PEN), transparente Polsulfone (PSU).

In einer weiteren Ausführungsform betrifft die vorliegende Erfindung ein solches Identifikationsdokument, dadurch gekennzeichnet, dass der Themoplast in Schicht A) und Schicht C) unabhängig voneinander ausgewählt ist aus der Gruppe bestehend aus Polycarbonat, Poly- oder Copolykondensate der Terephthalsäure, wie beispielhaft und vorzugsweise Poly- oder Copolyethylenterephthalat (PET oder CoPET) oder glycol-modifiziertes PET (PETG).

Schichtstoffe für insbesondere Hochsicherheits-ID-Kartenanwendungen mit mindestens einer lagerstabilen, latent-reaktiven Schicht können demnach hergestellt werden durch die Verwendung einer im wesentlichen wässrigen Dispersion, die wenigstens ein oberflächendesaktiviertes Polyisocyanat und wenigstens ein dispergiertes oder gelöstes mit Isocyanat reaktives Polymer enthält.

Weiterhin ist ein Verfahren zur Herstellung von Schichtstoffen mit mindestens einer lagerstabilen, latent-reaktiven Schicht Gegenstand der Erfindung, bei dem
a.) eine im wesentlichen wässerige Dispersion oder Lösung aus wenigstens einem gegenüber Isocyanaten reaktiven Polymer und
b.) wenigstens ein im wesentlichen in Wasser suspendiertes oberflächendesaktiviertes, festes, feinteiliges Di- oder Polyisocyanat gemischt werden, wobei das Di-oder Polyisocyanat eine Schmelz- bzw. Erweichungstemperatur von > 30 °C aufweist und das Isocyanat-reaktive Isocyanat-reaktive Polymer ein Polyurethan ist, das aus kristallisierenden Polymerketten aufgebaut ist, welche bei Messung mittels TMA bei Temperaturen unter +110°C partiell oder vollständig dekristallisieren,
c) diese Mischung wahlweise auf ein Substrat in einer vorbestimmbaren Schichtstärke aufgetragen wird und
d.) das Wasser des Gemisches unterhalb der Reaktionstemperatur des Isocyanates entfernt wird,
   so dass die dadurch erhaltenen im wesentlichen trockenen und wasserfreien Schichten oder Massen bei Reaktionstemperaturen unterhalb der Reaktionstemperatur von Polyisocyanat und Polymer lagerstabil und latent-reaktiv sind.

Überaschenderweise wurde gefunden, dass das Entfernen des Wassers und Trocknen des Gemisches im Temperaturbereich wahlweise bei
i) Raumtemperatur bis Erweichungstemperatur des funktionellen Polymeren oder
ii) oberhalb der Erweichungstemperatur des Polymern
   erfolgen kann, solange die Reaktionstemperatur des oberflächendesaktivierten Polyisocyanates in keinem der beiden Fälle überschritten wird. Unabhängig davon, ob das Trocknen nach i) oder ii) erfolgt, sind die oberflächendesaktivierten festen, feinteiligen Polyisocyanate nach der Trocknung unverändert und unreagiert in dem weitgehend wasserfreien Polymer bzw. in der im wesentlichen wasserfreien Schicht oder Pulver verteilt und eingebettet. Die Dispersion, Suspension oder Lösung von Polymer und suspendiertem desaktivierten Isocyanat geht in eine kontinuierliche Phase von unvernetztem Polymer über, in dem die unreagierten oberflächendesaktivierten, feinteiligen Isocyanate suspendiert sind.

Im Falle i) resultiert ein wasserfreier, trockener, latent-reaktiver Film oder ein latent-reaktives Pulver, welche bei Raumtemperatur oder bei leicht erhöhter Temperatur lagerfähig ist. Die Reaktionsfähigkeit der oberflächendesaktivierten Isocyanate mit den funktionellen Gruppen des Polymern wird erhalten.

Im Falle ii) resultiert nach dem Verdampfen des Wassers ein geschmolzenes System. Als Beispiel dient das Verkleben eines Laminates aus Folien. Auch in dieser Phase sind die oberflächendesaktivierten Isocyanate unverändert und behalten ihre Reaktivität. Die Verklebung basiert zunächst auf den thermoplastischen Eigenschaften des Polymers.

In beiden Fällen vernetzt das System und es wird unschmelzbar und unlöslich erst bei Überschreiten der Reaktionstemperatur des oberflächendesaktivierten Isocyanats. Dies erfolgt nach einer vorbestimmbaren Zeitspanne.

In gewissen Fällen genügt ein kurzfristiges Überschreiten der Reaktionstemperatur, um die Vernetzungsreaktion auszulösen. Die Reaktions- oder Aufdicktemperaturen der desaktivierten Polyisocyanate sollten dabei Temperaturen im Bereich von 30°C bis 180°C aufweisen, bevorzugt im Bereich zwischen 40°C und 150°C liegen.

Aufdickung- oder Reaktionstemperatur bezeichnet die Temperatur, bei der sich die oberflächendesaktivierende Schicht des Isocyanats im Polymer löst oder auf andere Weise zerstört wird. Das Polyisocyanat wird freigesetzt und im Polymer gelöst. Die Endaushärtung erfolgt durch Diffusion und Reaktion des Polyisocyanates mit den funktionellen Gruppen des Polymeren unter Viskositätsanstieg und Vernetzung. Die Aufdickungs- und Reaktionstemperatur liegt je nach Art des oberflächendesaktivierten Polyisocyanates ober- oder unterhalb der Erweichungstemperatur des Polymeren.

Die Stabilität des unreagierten Systems, die Reaktionstemperatur und der Reaktionsverlauf werden bestimmt durch die Art des Polyisocyanats, durch Art und Menge des Oberflächenstabilisators, durch den Löslichkeitsparameter des funktionellen Polymers sowie durch Katalysatoren, Weichmacher und andere Hilfsmittel. Diese werden weitgehend in den eingangs erwähnten Schutzrechte beschrieben.

Weiterhin sind der Applikation nachfolgende Bearbeitungsschritte des die Schicht oder das Pulver tragenden Substrates Gegenstand der Erfindung. Diese umfassen Schritte, wie sie z.B. bei der Bearbeitung des Substrates in seine endgültige Form durch Stanzen, Zuschneiden, Biegen, Falzen, Laminieren, etc. notwendig sind. Dabei wurde weiterhin unerwarteterweise festgestellt, dass der erfindungsgemäße Film oder Pulver in ihrem plastischen Zustand verarbeiten werden kann. Selbst nach Tagen oder Monaten kann die Schicht oder das Pulver auf Temperaturen oberhalb der Erweichungstemperatur des Polymern erhitzt werden, ohne dass Reaktion zwischen den funktionellen Gruppen des Polymern und den oberflächendesaktivierten Isocyanaten eintritt. Die Verarbeitung im plastischen Zustand kann dabei sogar unter mehrmaligem Erwärmen und Kühlen erfolgen.

In einer bevorzugten Ausführungsform sind die Filme oder Pulver lagerstabile, latent-reaktive Klebstoffsysteme.

Werden auf die elektronischen Bauteile solch latent-reaktiven selbstklebende Folien aufgebracht, so können die gewünschten Elemente durchaus zu einer Karte zusammengefügt werden. Diese erfindungsgemäßen Adhäsivlagen stellen nunmehr keinen Schwachpunkt des Kartenaufbaus mehr dar, da sie über die Kartenkante mittels Wasserdampf und Luft nicht mehr hineindiffundieren können und somit nicht mehr zu einer nachträglichen Delamination führen können. Solchen Kartenaufbauten können nicht mehr unzerstört getrennt werden.

Als Polyisocyanate für das erfindungsgemäße Verfahren sind alle Di- oder Polyisocyanate oder deren Gemische geeignet, sofern sie einen Schmelzpunkt oberhalb 40°C aufweisen und sich durch bekannte Methoden in Pulverform mit Teilchengrößen unter 200 µm überführen lassen. Es können aliphatische, cycloaliphatische, heterocyclische oder aromatische Polyisocyanate sein. Als Beispiele seien genannt: Diphenylmethan-4,4'-diisocyanat (MDI), Naphthalin-1,5-diisocyanat (NDI), 3,3'-Dimethyl-biphenyl-4,4'-diisocyanat (TODI), dimeres 1-Methyl-2,4-phenylendiisocyanat (TDI-U), 3,3'-Diisocyanato-4,4'-dimethyl-N,N'-diphenylharnstoff (TDIH), Additionsprodukt von 2 Mol 1-Methyl-2,4-phenylen-diisocyanat mit 1 Mol 1,2-Ethandiol, 1,4-Butandiol, 1,4-Cyclohexan-di-methanol, oder Ethanolamin, das Isocyanurat des IPDI (IPDI-T).

Die genannten Additionsprodukte zeigen nicht nur als wässrige Dispersionen die erfindungsgemäßen Vorteile. Additionsprodukte aus 1-Methyl-2,4-phenylen-diisocyanat und 1,4 Butandiol oder 1,2 Ethandiol besitzen auch in festen und flüssigen lösungsmittelhaltigen oder lösungsmittelfreien Systemen sehr vorteilhafte Eigenschaften. Diese zeigen sich vor allem hinsichtlich ihrer niedrigen Aushärtungs- bzw. Vernetzungstemperatur, die im Temperaturbereich unter 90°C liegt. Damit ist die Verwendung dieser Mischung ob nun weitgehend auf Wasser- oder Polyolbasis sehr vorteilhaft für Beschichtungen und Verklebungen temperaturempfindlicher Substrate.

Die Oberflächenstabilisierungsreaktion kann auf verschiedenen Wegen durchgeführt werden:
Durch Dispersion des pulverförmigen Isocyanats in einer Lösung des Desaktivierungsmittels.

Durch Eintragen einer Schmelze eines niederschmelzenden Polyisocyanats in eine Lösung des Desaktivierungsmittels in einem nichtlösenden flüssigen Dispersionsmittel.

Durch Zugabe des Desaktivierungsmittels oder einer Lösung desselben, zur Dispersion der festen feinteiligen Isocyanate.

Die Konzentration des Desaktivierungsmittels soll 0.1 bis 25, bevorzugt 0.5 bis 8 Equivalentprozent betragen, bezogen auf die total vorhandenen Isocyanatgruppen.

Oft muss für den erfindungsgemäßen Einsatz die Teilchengröße der pulverförmigen Polyisocyanate, durch eine der Synthese nachgeschaltete Feindispergierung oder Nassmahlung auf eine Teilchengröße im Bereich von 0.5 bis 20 µm gebracht werden. Hierfür eignen sich Dissolver, Dispergiergeräte von Rotor-Stator Typ, Rührwerkskugelmühlen, Perl-und Sandmühlen, Kugelmühlen und Reibspaltmühlen, bei Temperaturen unter 40°C. Je nach Polyisocyanat und Verwendung erfolgt die Vermahlung am desaktivierten Polyisocyanat, in Gegenwart des Desaktivierungsmittels, im nichtreaktiven Dispergiermittel oder Wasser mit nachfolgender Desaktivierung. Das gemahlene und oberflächenstabilisierte Polyisocyanat lässt sich auch aus den Mahl-Dispersionen abtrennen und trocknen.

Um die Oberflächendesaktivierung und die Vernetzungsreaktion zu steuern, können auch Katalysatoren zugegeben werden. Bevorzugt sind solche Katalysatoren, welche in wässeriger Lösung oder Dispersion hydrolysenstabil sind und später dann auch die wärmeaktivierte Reaktion beschleunigen. Beispiele für Urethankatalysatoren sind organische Zinn-, Eisen-, Blei-, Kobalt-, Wismuth-, Antimon-, Zink-Verbindungen oder ihre Mischungen. Alkylmercaptidverbindungen des Dibutylzinns werden auf Grund der höheren Hydrolysenstabilität bevorzugt.

Tertiäre Amine wie Dimethylbenzylamin, Diazabicyclo-undecen, sowie nichtflüchtige Polyurethanschaumkatalysatoren auf tertiärer Aminbasis können für spezielle Zwecke oder in Kombination mit Metallkatalysatoren verwendet werden, die katalanische Aktivität kann aber durch Umsetzung mit dem Kohlendioxyd der Luft beeinträchtigt werden.

Die Konzentration der Katalysatoren liegt im Bereich von 0.001 bis 3 %, bevorzugt 0.01%-1% bezogen auf das reaktive System.

Die wässrigen Dispersionen für die erfindungsgemäßen Zubereitungen enthalten vorzugsweise als isocyanatreaktives Dispersionspolymer Polyurethan- bzw. Polyharnstoffdispersionen mit kristallinen Polyesterweichsegmenten. Besonders bevorzugt sind Dispersionen isocyanatreaktiver Polyurethanpolymere aus kristallinen bzw. teilkristallinen Polymerketten, die bei Messung mittels thermomechanischer Analyse (TMA) bei Temperaturen zwischen 50°C und 120°C zumindest partiell dekristallisieren.

Ggf. können auch die Acrylat-Dispersionspolymere aufgeführt werden, im Fokus stehen aber die Polyurethan- bzw. Polyharnstoff-Dispersionspolymere mit kristallinen Polyesterweichsegmenten.

Als erfindungsgemässe Reaktionspartner der Polyisocyanate kommen wasserlösliche oder wasserdispergierbare Emulsions- oder Dispersionspolymere in Frage, welche isocyanatreaktive funktionelle Gruppen tragen. Diese werden dem Stand der Technik entsprechend durch Polymerisation von olefinisch ungesättigten Monomeren in Lösung, Emulsion oder Suspension hergestellt. Die filmbildenden Polymerisate enthalten 0.2 bis 15 %, bevorzugt 1 bis 8 % einpolymerisierte Monomere mit isocyanatreaktiven Gruppen, wie Hydroxyl-, Amino-, Carboxyl-, Carbonamid-gruppen.

Beispiele von solchen funktionellen Monomeren sind: Allylalkohol, Hydroxyethyl- oder Hydroxypropyl-acrylat und -methacrylat, Butandiol-monoacrylat, ethoxylierte- oder propoxylierte Acrylate oder Methacrylate, N-Methylol-acrylamid, tert. Butylamino-ethylmethacrylat, Acryl- und Methacrylsäure, Maleinsäure, Maleinsäure-monoester. Auch Glycidylmethacrylat und Allylglycidylether können copolymerisiert werden. Diese enthalten eine Epoxygruppe, die in einem weiteren Schritt mit Aminen oder Aminalkoholen zum sekundären Amin derivatisiert wird, beispielsweise mit Ethylamin, Ethylhexylamin, Isononylamin, Anilin, Toluidin, Xylidin, Benzylamin, Ethanolamin, 3-Amino-1-propanol, 1-Amino-2-propanol, 5-Amino-1-pentanol, 6-Amino-1-hexanol, 2-(2-Aminoethoxy)ethanol.

Diese Umsetzung erhöht die Reaktivität der funktionellen Gruppen des Polymeren gegenüber den Isocyanatgruppen, zu Lasten der Nebenreaktion mit Wasser.

Geeignet sind auch wasserlösliche hydroxyfunktionelle Bindemittel wie Polyvinylalkohol, teilverseiftes Polyvinylacetat, Hydroxyethylcellulose, Hydroxypropylcellulose, sowie wasserdispergierbare hydroxyfunktionelle Polyester, hydroxyfunktionelle Sulfopolyester, und Polyurethandispersionen, Dispersionen von Polyamidoaminen, welche Carboxyl-, Hydroxylprimäre oder sekundäre Aminogruppen tragen.

Ebenso können wässerige kolloidale Dispersionen oder kolloidale Lösungen mit Teilchengrößen zwischen 1 - 100 nm in Kolloidmühlen hergestellt werden, ausgehend von thermoplastischen Polymeren mit isocyanatreaktiven Gruppen. Beispiel sind höhermolekulare feste Epoxyharze, Poly-ethylen-vinylalkohol und Poly-ethylen-co-acrylsäure.

In die resultierende hochviskose Paste oder niederviskose Mischung können weitere inerte oder funktionelle Zusätze eingemischt oder dispergiert werden. Zu den funktionellen Zusätzen gehören hydroxy- oder aminofunktionelle pulverförmige oder flüssige nieder- bis hochmolekulare Verbindungen, welche mit den festen Polyisocyanaten oberhalb der Reaktionstemperatur reagieren können. Die stöchiometrischen Verhältnisse sind entsprechend anzupassen. Als niedermolekulare Verbindungen werden Verbindungen mit Molekulargewichten zwischen 40 und 500 g/mol verstanden, unter hochmolekularen Verbindungen solche, deren Molekulargewichte zwischen 500 und 10000 g/mol liegen. Als Beispiele können angeführt werden: Niedermolekulare bis hochmolekulare flüssige Polyole oder/und Polyamine, feste polyfunktionelle Polyole oder/und aromatische Polyamine. Beispiele sind Triethanolamin, Butandiol, Trimethylolpropan, ethoxyliertes Bisphenol A, endständig ethoxylierte Polypropylenglykole, 3,5-Diethyl-toluylen-2,4- und 2-6-diamin, Polytetramethylenoxid-di-(p-aminobenzoat), Tris-hydroxyethyl-isocyanurat, Hydrochinon-bishydroxyethylether, Pentaerythrit, 4,4'-Diamino-benzanilid, 4,4'-Methylen-bis-(2,6-diethylanilin).

Zu den inerten Zusätzen gehören beispielsweise Netzmittel, organische oder anorganische Verdickungsmittel, Weichmacher, Füllstoffe, Kunststoffpulver, Pigmente, Farbstoffe, Lichtstabilisatoren, Alterungsstabilisatoren, Korrosionsschutzmittel, Flammschutzmittel, Treibmittel, Haftharze, organofunktionelle Silane, kurzgeschnittene Fasern und gegebenenfalls geringe Mengen von inerten Lösungsmitteln.

Die Vorteile der vorliegenden Erfindung liegen in der Trennung von Applikation der wässrigen Dispersion von der Vernetzungsreaktion d.h. der endgültigen Aushärtung. Damit können z.B. an einem Ort Klebstofffilme auf Holz, Glas oder anderweitige Substrate oder Unterlage aufgetragen werden, diese vorgefertigten Fabrikate gelagert und/oder verschickt werden und an einem anderen Ort zum Endprodukt ausgehärtet werden.

Ein weiterer Vorteil des erfindungsgemäßen Verfahrens und der Verwendung der entsprechenden Produkte liegen in der Verwendung von Wasser als Dispersionsmedium . Der Energieverbrauch zur Herstellung der Dispersionen ist gering. Der Anteil organischer Lösungsmittel minimal, was in einer aus Umweltschutzgesichtspunkten sehr vorteilhaftenVerarbeitung resultiert.

Wenn von einer wässerigen Polymerdispersion ausgegangen wird, liegt ein weiterer Vorteil darin, dass auch oberflächendesaktivierte Polyisocyanate mit einem Schmelzpunkt im Bereich 40 bis 150°C ohne Probleme eingearbeitet werden können. Die Vernetzungstemperaturen können im Bereich von 35°C bis 90°C liegen. Mit diesen niedrigen Vernetzungstemperaturen können auch temperaturempfindliche Substrate mit diesem Einkomponentensystem durch Wärmeeinwirkung verklebt werden.

Die aus der wässrigen Suspension, Dispersion oder Lösung erhaltene Schicht oder Pulver lässt sich monatelang lagern. Je nach den Lösungseigenschaften des festen Films für das Polyisocyanat ist die Lagerdauer bei Raumtemperatur oder leicht erhöhten Temperaturen jedoch unterschiedlich. Die Lagerdauer des erfindungsgemäßen Systems im wasserfreien und unvernetzten Zustand ist wenigstens das 3-fache, üblicherweise mehr als das 10-fache der gleichen Mischung mit den gleichen Polyisocyanaten, welche nicht oberflächen-desaktiviert sind. Bei +2°C sind die erfindungsgemäßen Schichten oder Pulver mindestens sechs Monate lagerstabil, bei Raumtemperatur jedoch mindestens 1 Monat lagerstabil und erfindungsgemäß verarbeitungsfähig. Der Begriff latent-reaktiv bezeichnet den Zustand der im wesentlichen wasserfreien Schicht oder Pulvers in der das oberflächendesaktivierte Polyisocyanat und das mit Isocyanaten reaktive Polymer im wesentlich unvernetzten Zustand vorliegen.

Die Wärmezufuhr für die thermoplastische Verarbeitung sowie die Vernetzung kann vorzugsweise mit Konvektions- oder Strahlungswärme erfolgen. Die lagerstabile wässerige Suspension, Dispersion oder Lösung aus oberflächendesaktivierten feinteiligen Polyisocyanaten und dispergierten oder wasserlöslichen Polymeren mit isocyanatreaktiven Gruppen kann auf die Oberfläche des zu verklebenden oder zu beschichtenden Substrates appliziert werden, insbesondere durch Pinseln, Sprühen, Spritzen, Rakeln, Spachteln, Giessen, Tauchen, Extrudieren oder durch Walzauftrag oder im Druckverfahren aufgetragen werden.

Als Substrate für die erfindungsgemäßen Schichtstoffe sind geeignet Thermoplaste wie Polycarbonate oder Copolycarbonate auf Basis von Diphenolen, der Poly- oder Copolyacrylate und Poly- oder Copolymethacrylate wie beispielhaft und vorzugsweise Polymethylmethacrylat (PMMA), Poly- oder Copolymere mit Styrol wie beispielhaft und vorzugsweise transparentes Polystyrol (PS) oder Polystyrolacrylnitril (SAN), transparente thermoplastische Polyurethane, sowie Polyolefine, wie beispielhaft und vorzugsweise transparente Polypropylentypen oder Polyolefine auf der Basis von cyclischen Olefinen (z. B. TOPAS®, Topas Advanced Polymers), Poly- oder Copolykondensate der Terephthalsäure, wie beispielhaft und vorzugsweise Poly- oder Copolyethylenterephthalat (PET oder CoPET) oder glycol-modifiziertes PET (PETG), Polyethylenglykolnaphthenat (PEN), transparente Polsulfone (PSU).

Im Falle der Verklebung von Substraten kann man wahlweise wie folgt vorgehen:
1. Pressverklebung durch Fügen der Haftflächen bei Raumtemperatur und Erhöhen der Temperatur bis über die Erweichungstemperatur des Polymeren, aber unter der Reaktionstemperatur, dann Abkühlen auf Raumtemperatur. Es entsteht ein Verbund, der latent reaktiv ist. Dieser Verbund kann weiterbearbeitet und geformt werden, auch im platischen bzw. thermoplastischen Bereich des Polymers. Den endgültigen vernetzten Zustand erhält die Verklebung, wenn die Temperatur bis über die Aufdickungs- oder Reaktionstemperatur erhöht wird.
2. Pressverklebung durch Fügen der Haftflächen bei Raumtemperatur und Erhöhen der Temperatur bis über die Erweichungstemperatur des Polymeren, Ausbilden eines homogenen Klebstofffilms, der die Gegenfläche benetzt und haftet, Erhöhen der Temperatur bis über die Aufdickungs- oder Reaktionstemperatur und endgültige Vernetzung.
3. Die beschichtete Haftfläche wird durch Erhöhen der Temperatur bis über die Erweichungstemperatur des Polymeren in den thermoplastischen Zustand gebracht, mit einem zweiten Substrat gefügt und unter Pressung die Temperatur bis über die Aufdickungs- oder Reaktionstemperatur erhöht. Gegebenenfalls können im thermoplastischen Zustand des System weitere Verarbeitungsschritte durchgeführt werden.

In einer zweiten Ausführungsform des Verfahrens wird die lagerstabile wässerige Dispersion von oberflächendesaktivierten feinteiligen Polyisocyanaten und dispergierten oder wasserlöslichen Polymeren mit isocyanatreaktiven Gruppen in die Form eines latent-reaktiven Klebefilms, Klebebandes, Klebevlieses oder -gewebes gebracht, der beidseitig Haftung aufbauen kann. Zur Herstellung von trägerfreien Formen, wie Filmen oder Bändern, wird die erfindungsgemäße Dispersion auf ein nichthaftendes Trägerband oder Trennpapier appliziert und das Wasser bei Raumtemperatur oder bei Temperaturen bis zur Erweichungstemperatur des Polymers verflüchtigt. Der Klebstoffilm kann nach Abkühlen vom Träger gelöst werden und bis zur Verwendung trägerfrei gelagert werden. Alternativ kann der Klebstoffilm mit dem Trägerpapier zusammen gelagert werden.

Im Falle der Klebevliese oder -gewebe wird die reaktionsfähige Dispersion durch Sprühen, Spritzen, Rakeln, Giessen, Tauchen, Foulardieren, durch Walzauftrag oder im Druckverfahren appliziert, das Wasser bei Raumtemperatur oder bei Temperaturen bis zur Erweichungstemperatur des Polymers verflüchtigt, und das Klebevlies oder -gewebe, versehen oder imprägniert mit der latent wärmereaktiven Klebeschicht, bis zur Verwendung gelagert.

Die trägerfreien Klebefilme, Klebebänder, Klebevliese oder -gewebe dienen als Klebeschicht zwischen Substraten. Es ist auch möglich, Klebefilme, -vliese oder -gewebe einseitig auf eine Substratfläche im plastischen Zustand aufzubringen oder zu sintern. Dieses Laminat kann bis zur endgültigen Verklebung mit einer zweiten Substratoberfläche bei Raumtemperatur gelagert werden.

In einer dritten Ausführungsform des Verfahrens wird die lagerstabile wässerige Dispersion von oberflächendesaktivierten feinteiligen Polyisocyanaten und dispergierten oder wasserlöslichen Polymeren mit isocyanatreaktiven Gruppen in die Form eines latentreaktiven Pulvers gebracht. Diese Pulver können als latentreaktive Klebestoffe oder zu Beschichtungszwecken, wie Pulverlacke, verwendet werden.

Zur Herstellung von Pulvern aus den erfindungsgemäßen Dispersionen können diese in einem Sprühturm versprüht werden. Die Temperatur der von unten eingeleiteten Luft soll unter der Erweichungstemperatur des Polymers und der Reaktionstemperatur des oberflächenblockierten Polyisocyanats bleiben.

Alternativ können die erfindungsgemäßen Dispersionen auf die nicht haftende Oberfläche eines umlaufenden Bandes mit dehäsiven Oberflächen gesprüht oder mit einem Druckverfahren appliziert werden. Nach dem Verflüchtigen des Wassers werden die trockenen Partikel vom Band abgeschabt, gegebenenfalls gesiebt und klassiert, und bis zur Verwendung gelagert.

Latent reaktive Pulver können auch aus trägerfreien Filmen oder Bändern durch Mahlprozesse, gegebenenfalls bei tiefen Temperaturen, hergestellt werden. Sie dienen als wärmereaktive vernetzbare Klebe- oder als Beschichtungspulver. Applikationsgeräte und - methoden sind Stand der Technik und dem Fachmann bekannt.

Die mit dem erfindungsgemäßen Verfahren hergestellten latentreaktiven vorgefertigten Schichten dienen vorzugsweise als thermisch belastbare Klebeverbindung für flexible oder feste Substrate wie z.B. Metallen, Kunststoffen, Glas, Holz, Holzverbundstoffe, Karton, Folien, synthetischen Flächengebilden, Textilien,.

Die erfindungsgemäss hergestellten reaktiven Beschichtungspulver lassen sich auch mit den Applikationsmethoden für Pulverlacke verarbeiten. Die Vernetzungstemperatur kann je nach Wahl des Polyisocyanats so niedrig sein, dass wärmeempfindliche Substrate, wie Kunststoffe, Textilien und Holz, ohne thermische Schädigung beschichtet werden können. Das Verfahren erlaubt auch die Beschichtungspulver auf dem Substrat nur zu sintern oder zu einer geschlossenen Schicht zu schmelzen. Die vollständige Vernetzung erfolgt dann bei einer späteren Wärmebehandlung, gegebenenfalls nach einem zusätzlichen mechanischen oder thermischen Bearbeitungsschritt.

### Beispiele

### A) Verwendete handelsübliche Produkte:

### Dispercoll® U 53

Polyurethandispersion der Bayer MaterialScience AG, 51368 Leverkusen; Feststoffgehalt ca. 40 Gew.-%.; Isocyanat-reaktives Polymer aus linearen Polyurethanketten. Das Polymer kristallisiert nach dem Trocknen der Dispersion und Abkühlen des Films auf 23°C. Bei Messung mittels thermomechanischer Analyse (TMA) ist der Film bei Temperaturen < + 65°C weitgehend dekristallisiert.

### Desmodur® DN

Lösemitteffreies hydrophil modifiziertes Vernetzerisocyanate auf Basis HDI-Trimer. NCO-Gehalt ca. 20%, Viskosität ca. 1200 mPas bei 23°C

### Dispercoll® BL XP 2514

Suspension von oberflächendeaktivierten TDI-Uretdion (TDI-Dimer) in Wasser mit einem Feststoffgehalt von ca. 40% .

### Dispercoll® U VP KA 8755

Polyurethandispersion der Bayer MaterialScience AG, 51368 Leverkusen; Feststoffgehalt ca. 40 Gew.-%.; Isocyanat-reaktives Polymer aus linearen Polyurethanketten. Das Polymer kristallisiert nach dem Trocknen der Dispersion und Abkühlen des Films auf 23°C. Bei Messung mittels thermomechanischer Analyse ist der Film bei Temperaturen < + 65°C weitgehend dekristallisiert.

### Borchi® Gel L 75 N

Nicht-ionischer, flüssiger, aliphatisches Polyurethan-basierter Verdicker: Viskosität bei 23°C: > 9.000 mPas; Nicht flüchtige Bestandteile: ca. 50 Gew.-%

### Aqua Press® ME

Handelsübliche milchig weiße Dispersion der Fa. Pröll

### Borchi® Gel ALA

Wässrige Lösung eines anionischen, Acrylat-basierten Verdickers: Viskosität bei 20°C (Brookfield, LVT, Hydrometer IV, 6 rpm): 25.000 bis 60.000 mPas; Nicht flüchtige Bestandteile: ca. 10 Gew.-%

### Dispercoll Laborprodukt KRAU 2756 K-1

Polyurethandispersion der Bayer MaterialScience AG, 51368 Leverkusen; Feststoffgehalt ca. 45 Gew.-%.; Isocyanat-reaktives Polymer aus linearen Polyurethanketten.

Das Polymer kristallisiert partiell nach dem Trocknen der Dispersion und Abkühlen des Films auf 23°C. Bei Messung mittels thermomechanischer Analyse ist der Film bei Temperaturen < + 65°C weitgehend dekristallisiert.

Die Messungen mittels TMA wurden analog zu ISO 11359 Teil 3 "Bestimmung der Penetrationstemperatur" durchgeführt.

### B) Lagerungen:

### Lagerung A

Dispersion bei Raumtemperatur applizieren, weitgehendes Entfernung des Wassers durch Verdunsten bei Raumtemperatur auf der Folie, nach max. 3 Stunden Klebeflächen sofort laminieren bei 90°C oder 120 °C (Objekttemperatur), wobei die Vernetzungsreaktion ausgelöst wird. Abkühlen und 24 Std. bei Normalbedingungen lagern.

### Lagerung B

Dispersion bei Raumtemperatur applizieren, weitgehendes Entfernung des Wassers durch Verdunsten bei Raumtemperatur auf der Folie, 1 Tage bei Normalbedingungen lagern, dann bei 90°C oder 120 °C laminieren (Objekttemperatur), wobei die Vernetzungsreaktion ausgelöst wird. Abkühlen und 24 Std. bei Normalbedingungen lagern.

### Lagerung C

Dispersion bei Raumtemperatur applizieren, weitgehendes Entfernung des Wassers durch Verdunsten bei Raumtemperatur auf der Folie, minimal 7 Tage bei Normalbedingungen lagern, dann bei 90°C oder 120 °C laminieren (Objekttemperatur), wobei die Vernetzungsreaktion ausgelöst wird. Abkühlen und 24 Std. bei Normalbedingungen lagern.

### Lagerung D

Auf Folie auftragen, weitgehendes Entfernung des Wassers durch Verdunsten bei Raumtemperatur. Die mit Klebstoffschicht versehene Fläche offen an der Luft für 21 Tage liegen lassen. Dann bei 90°C oder 120 °C laminieren (Objekttemperatur), wobei die Vernetzungsreaktion ausgelöst wird. Abkühlen und 24 Std. bei Normalbedingungen lagern.

### C) Probenherstellung und Prüfverfahren

Prüfung der Haftfestigkeit der Verklebung zweier Folien gemäß Trennversuch nach DIN 53 357:
Prüflinge mit 200 x 50 x 0,15 mm³ bestehend aus zwei Folien wurden einfach überlappend pressverklebt (laminiert). Auf einer Länge von ca. 40 mm bleiben die Folien voneinander getrennt, so dass zwei Zungen entstehen, die in die Einspannklemmen der Zugprüfmaschine eingespannt werden können. Die Klebefläche beträgt ca. 160 x 50 mm². Die Festigkeit der Klebung wurde bei 120°C durchgeführt.

Abweichende oder andere Prüfbedingungen oder Prüfungen sind jeweils angegeben.

### D) Applikation und Prüfung der reaktiven Klebstoffdispersionen

### Verwendete Klebstoffdispersionen:

Herstellung der Klebstoffdispersionen. Allgemeine Vorschrift:
Zunächst wird bei der Dispercoll U-Dispersion durch einen Verdicker die Viskosität erhöht.

| | Gewichtsteile |
|---|---|
| Dispercoll® U 53 | 100 |
| Borchigel® ALA | 2 |

Anschließend werden unter Rühren zu 100 Gewichtsteilen Dispercoll U 53 5 bis 10 Gewichtsteile eines deaktivierten Polyisocyanats zugegeben , so dass die folgenden wässrigen Suspensionen erhalten werden:
Es wurde mit dem Dissolver ein reaktiver Dispersionsklebstoff mit den angegebenen Polyisocyanaten wie folgt hergestellt:

| Beispiel 1 (Vergleichsbeispiel; nicht erfindungsgemäß) | |
|---|---|
| | Gewichtsteile |
| Dispercoll® U 53 | 100 |
| Borchigel® ALA | 2 |

| Beispiel 2 (erfindungsgemäß) | |
|---|---|
| | Gewichtsteile |
| Dispercoll® U 53 | 100 |
| Borchigel® ALA | 2 |
| Desmodur® DN | 5 |

| Beispiel 3 (erfindungsgemäß) | |
|---|---|
| | Gewichtsteile |
| Dispercoll® U 53 | 100 |
| Borchigel® ALA | 2 |
| Dispercoll® BL XP 2514 | 10 |

| Beispiel 4 | |
|---|---|
| | Gewichtsteile |
| Dispercoll® U 53 | 100 |
| Borchigel® ALA | 2 |
| IPDI-Trimer-Formulierung (3 Äqui.-% Amino-Gruppen vom Jeffamine T-403) | 20 |

### Beispiel 5 (Vergleichsbeispiel; nicht erfindungsgemäß):

Aqua Press® handelsüblicher wässriger 1-Komponenten Haftvermittler der Fa. Pröll KG, Weißenburg

### Beispiel 6

Die Klebstoffmischungen der Beispiele 1 bis 5 wurden mit einem Spiralrakel auf Makrofol® ID 6-2 (beidseitig strukturierte Polycarbonat-Folie der Bayer MaterialScience AG, Speziell für Identifikationskarten, 6-er Seite: Rauhigkeit R₃z ca. 9 µm; 2-er Seite: R₃z ca. 4 µm), 150 µm mit einer Nassschichtdicke von 100 µm aufgetragen. Die Folien wurden bei Normalbedingungen getrocknet.

Jede der beschichteten Folien wurde nach der angegebenen Lagerung A bis C gegen eine unbeschichtete Makrofol® ID 6-2, 150 µm-Folie laminiert und wie in Kapitel C) beschrieben geprüft. Die Laminierung erfolgte unter mechanischem Druck von 2 kp/cm² bei 90°C und 120°C (Pressverklebung).

Danach wurden im Trennversuch die mechanische Festigkeit der Verklebung in Abhängigkeit von der Lagerung A bis C (Lagerdauer) und der Temperatur untersucht.

| Beispiel | | Lagerung | Laminationstemperatur | Mittelwert N/cm |
|---|---|---|---|---|
| | | | | |
| | | | | |
| Beispiel 1 | Nicht erfindungsgemäß | A | 90 | 1,03 |
| Beispiel 1 | Nicht erfindungsgemäß | B | 90 | 0,46 |
| Beispiel 1 | Nicht erfindungsgemäß | C | 90 | 1,38 |
| Beispiel 1 | Nicht erfindungsgemäß | A | 120 | 0,80 |
| Beispiel 1 | Nicht erfindungsgemäß | B | 120 | 0,88 |
| Beispiel 1 | Nicht erfindungsgemäß | C | 120 | 0,66 |
| Beispiel 2 | erfindungs gemäß | A | 90 | 8,67 |
| Beispiel 2 | erfindungs gemäß | B | 90 | 6,54 |
| Beispiel 2 | erfindungs gemäß | C | 90 | 2,64 |
| Beispiel 2 | erfindungs gemäß | A | 120 | 4,95 |
| Beispiel 2 | erfindungs gemäß | B | 120 | 3,21 |
| Beispiel 2 | erfindungs gemäß | C | 120 | 2,51 |
| Beispiel 3 | erfindungs gemäß | A | 90 | 11,57 |
| Beispiel 3 | erfindungs gemäß | B | 90 | 13,24 |
| Beispiel 3 | erfindungs gemäß | C | 90 | 13,42 |
| Beispiel 3 | erfindungs gemäß | A | 120 | 10,48 |
| Beispiel 3 | erfindungs gemäß | B | 120 | 17,90 |
| Beispiel 3 | erfindungs gemäß | C | 120 | 14,77 |
| Beispiel 4 | erfindungs gemäß | A | 90 | 3,52 |
| Beispiel 4 | erfindungs gemäß | B | 90 | 5,84 |
| Beispiel 4 | erfindungs gemäß | C | 90 | 5,99 |
| Beispiel 4 | erfindungs gemäß | A | 120 | 3,28 |
| Beispiel 4 | erfindungsgemäß | B | 120 | 4,26 |
| Beispiel 4 | erfindungs gemäß | C | 120 | 2,59 |
| Beispiel 5 | Nicht erfindungsgemäß | A* | 90 | 1,54 |
| Beispiel 5 | Nicht erfindungsgemäß | A* | 120 | 0,93 |

| | | | | |
|---|---|---|---|---|
| *Da bereits die Anfangsfestigkeit nicht vorhanden war, wurde auf eine weitere Lagerung verzichtet. | | | | |

Es wurden weitere Versuche zur Lagerstabilität der beschichteten Folien durchgeführt:

| Beispiel 7 | |
|---|---|
| | Gewichtsteile |
| Dispercoll® VP KA 8755 | 700 |
| Borchigel® L 75 N | 7 |
| Dispercoll® BL XP 2514 | 70 |

Die Klebstoffmischungen des Beispiels 7 wurden mit einem Spiralrakel auf Makrofol® ID 1-1 (beidseitig glatte Polycarbonat-Folie der Bayer MaterialScience AG, Speziell für Identifikationskarten), 250 µm mit einer Nassschichtdicke von 50 µm aufgetragen. Die Folienwurden im Vakuumtrockenschrank bei 50°C getrocknet.

Jede der beschichteten Folien wurde nach der angegebenen Lagerung A und D gegen eine unbeschichtete Makrofol® ID 1-1, 250 µm-Folie laminiert und wie in Kapitel C) beschrieben geprüft. Die Laminierung erfolgte unter mechanischem Druck von 2 kp/cm² bei 120°C und 135°C (Pressverklebung).

Danach wurden im Trennversuch die mechanische Festigkeit der Verklebung in Abhängigkeit von der
Lagerung A und D (Lagerdauer) und der Temperatur untersucht.

| Beispiel | | Lagerung | Laminationstemperatur | Mittelwert N/cm |
|---|---|---|---|---|
| | | | | |
| | | | | |
| Beispiel 7 | erfindungs gemäß | A | 120 | 31,30 |
| Beispiel 7 | erfindungs gemäß | D | 120 | 71,04 |
| Beispiel 7 | erfindungs gemäß | A | 135 | 73,59 |
| Beispiel 7 | erfindungs gemäß | D | 135 | 140,41 |

Die Laminate mit den Klebstoffzusammensetzungen analog Beispiel 7 zeichnen sich auch nach 21 Tagen Lagerung noch durch die Ausbildung einer sehr festen Klebeverbindung aus. Dabei werden bei der Aktivierungstemperatur von 135°C noch bessere Verklebungen als bei 120°C erzielt.

Nach dem Trennversuch sind die Oberflächen der verklebten Folien so stark beschädigt, dass eine weitere Verwendung solcher Oberflächen ausgeschlossen ist. Damit ist ein wesentliches Ziel für den Einsatz Sicherheitskarten erreicht: Eine unbeschädigte thermische Trennung verklebter Schichten ist bei den in den erfindungsgemäßen Beispielen eingesetzten Klebstoffen ausgeschlossen.

## Patentansprüche

1. Identifikationsdokument aufweisend Schicht A), B) und C), wobei A) ein Thermoplast ist, B) eine Schicht hergestellt aus einem latent-reaktiven Klebstoff ist, der bei +2°C mindestens für 6 Monate lagerstabil ist, und C) ein Thermoplast ist, **dadurch gekennzeichnet, dass** der Klebstoff eine wässrige Dispersion aufweist, die ein Di- oder Polyisocyanat mit Schmelz- bzw. Erweichungstemperatur von > 30°C und ein Isocyanat-reaktives Polymer enthält, wobei das Isocyanat-reaktive Polymer ein Polyurethan ist, das aus kristallisierenden Polymerketten aufgebaut ist, welche bei Messung mittels TMA bei Temperaturen unter +110°C partiell oder vollständig dekristallisieren.

2. Identifikationsdokument nach Anspruch 1, **dadurch gekennzeichnet, dass** das Isocyanat-reaktive Polymer Polyurethan ist, das aus kristallisierenden Polymerketten aufgebaut sind, welche bei Messung mittels TMA bei Temperaturen unter +90°C, partiell oder vollständig dekristallisieren.

3. Identifikationsdokument nach Anspruch 1, **dadurch gekennzeichnet, dass** das Di- oder Polyisocyanat ausgewählt ist aus der Gruppe bestehend aus Dimerisierungsprodukt, Trimerisierungsprodukt und Harnstoff-Derivate des TDI bzw. IPDI.

4. Identifikationsdokument nach Anspruch 1, **dadurch gekennzeichnet, dass** der Thermoplast in Schicht A) und Schicht C) unabhängig voneinander ausgewählt ist aus der Gruppe bestehend aus Polycarbonat, Polymethylmethacrylat (PMMA), Poly- oder Copolymere mit Styrol wie beispielhaft und vorzugsweise transparentes Polystyrol (PS) oder Polystyrolacrylnitril (SAN), transparente thermoplastische Polyurethane, sowie Polyolefine, wie beispielhaft und vorzugsweise transparente Polypropylentypen oder Polyolefine auf der Basis von cyclischen Olefinen (z. B. TOPAS®, Topas Advanced Polymers), Poly- oder Copolykondensate der Terephthalsäure, wie beispielhaft und vorzugsweise Poly- oder Copolyethylenterephthalat (PET oder CoPET) oder glycol-modifiziertes PET (PETG), Polyethylenglykolnaphthenat (PEN), transparente Polsulfone (PSU).

5. Identifikationsdokument nach Anspruch 1, **dadurch gekennzeichnet, dass** der Thermoplast in Schicht A) und Schicht C) unabhängig voneinander ausgewählt ist aus der Gruppe bestehend aus Polycarbonat, Poly- oder Copolykondensate der Terephthalsäure, wie beispielhaft und vorzugsweise Poly- oder Copolyethylenterephthalat (PET oder CoPET) oder glycol-modifiziertes PET (PETG).

6. Identifikationsdokument nach Anspruch 1, **dadurch gekennzeichnet, dass** es ein elektronisches Bauteil aufweist.

7. Identifikationsdokument nach Anspruch 1, **dadurch gekennzeichnet, dass** das elektronische Bauteil ein Integrated Circuit ist.

8. Ein Verfahren zur Herstellung eines Identifikationsdokuments nach Anspruch 1, umfassend die Schritte:
i) Mischen einer im wesentlichen wässerigen Dispersion oder Lösung aufweisend ein gegenüber Isocyanaten reaktives Polymer mit einem in Wasser suspendierten oberflächendesaktivierten Di- oder Polyisocyanat, wobei das Di- oder Polyisocyanat eine Schmelz- bzw. Erweichungstemperatur von > 30°C aufweist und das Isocyanat-reaktive Polymer ein Polyurethan ist, das aus kristallisierenden Polymerketten aufgebaut ist, welche bei Messung mittels TMA bei Temperaturen unter +110°C partiell oder vollständig dekristallisieren;
ii) Auftragen der in i) hergestellten Mischung auf eine Schicht A);
iii) Entfernen des Wassers aus der in i) hergestellten Mischung unterhalb der Reaktionstemperatur des Di- oder Polyisocyanates unter Bildung einer Schicht B);
iv) Aufbringen einer Schicht C) auf die in Schritt iii) hergestellte Schicht B).

9. Das Verfahren nach Anspruch 8, **dadurch gekennzeichnet, dass** das Wasser bei einer Temperatur unterhalb der Reaktionstemperatur des Polyisocyanates entfernt wird, so dass die dadurch erhaltene im wesentlichen trockenen und festen Schichten bei Temperaturen unterhalb der Reaktionstemperatur von Polyisocyanat und Polymeren latentreaktiv sind.

10. Verfahren nach Anspruch 8, **dadurch gekennzeichnet, dass** eine Klebeverbindung zwischen Schicht A) und Schicht C) hergestellt wird, indem die in Schritt iii) getrocknete Schicht B) durch kurzzeitiges, vorzugsweise weniger als 5 Minuten andauerndes Erwärmen auf T> 65°C, bevorzugt auf eine Temperatur von 80°C< T < 110°C dekristallisiert und im dekristallisierten Zustand mit Schicht B) gefügt wird.

11. Verwendung von lagerstabilen, latent-reaktiven Klebstoffen zur Herstellung von Identifikationsdokumenten.

## Claims

1. Identification document comprising layer A), B) and C), wherein A) is a thermoplastic, B) is a layer produced from a latently reactive adhesive which is storage-stable at least for 6 months at +2°C, and C) is a thermoplastic, **characterised in that** the adhesive contains an aqueous dispersion containing a diisocyanate or polyisocyanate having a melting point or softening point of > 30°C and an isocyanate-reactive polymer, wherein the isocyanate-reactive polymer is a polyurethane which is synthesised from crystallising polymer chains which, when measured using TMA, decrystallise partially or completely at temperatures below +110°C.

2. Identification document according to claim 1, **characterised in that** the isocyanate-reactive polymer is polyurethane, which is synthesised from crystallising polymer chains which, when measured using TMA, decrystallise partially or completely at temperatures below +90°C.

3. Identification document according to claim 1, **characterised in that** the diisocyanate or polyisocyanate is selected from the group consisting of dimerisation product, trimerisation product and urea derivatives of TDI or IPDI.

4. Identification document according to claim 1, **characterised in that** the thermoplastic in layer A) and layer C) is mutually independently selected from the group consisting of polycarbonate, polymethyl methacrylate (PMMA), polymers or copolymers with styrene, such as for example and preferably transparent polystyrene (PS) or polystyrene acrylonitrile (SAN), transparent thermoplastic polyurethanes, and polyolefins, such as for example and preferably transparent polypropylene types or polyolefins based on cyclic olefins (e.g. TOPAS®, Topas Advanced Polymers), polycondensates or copolycondensates of terephthalic acid, such as for example and preferably polyethylene or copolyethylene terephthalate (PET or CoPET) or glycol-modified PET (PETG), polyethylene glycol naphthenate (PEN), transparent polysulfones (PSU).

5. Identification document according to claim 1, **characterised in that** the thermoplastic in layer A) and layer C) is mutually independently selected from the group consisting of polycarbonate, polycondensates or copolycondensates of terephthalic acid, such as for example and preferably polyethylene or copolyethylene terephthalate (PET or CoPET) or glycol-modified PET (PETG).

6. Identification document according to claim 1, **characterised in that** it contains an electronic component.

7. Identification document according to claim 1, **characterised in that** the electronic component is an integrated circuit.

8. A process for producing an identification document according to claim 1, comprising the following steps:
i) Mixing a substantially aqueous dispersion or solution having an isocyanate-reactive polymer with a water-suspended surface-deactivated di- or polyisocyanate, wherein the di- or polyisocyanate has a melting or softening point of > 30°C and the isocyanate-reactive polymer is a polyurethane which is synthesised from crystallising polymer chains which, when measured using TMA, decrystallise partially or completely at temperatures below + 110°C;
ii) Applying the mixture produced in i) to a layer A);
iii) Removing the water from the mixture produced in i) below the reaction temperature of the diisocyanate or polyisocyanate to form a layer B);
iii) Applying a layer C) to the layer B) produced in step iii).

9. The process according to claim 8, **characterised in that** the water is removed at a temperature below the reaction temperature of the polyisocyanate such that the substantially dry and solid layers obtained in this way are latently reactive at temperatures below the reaction temperature of polyisocyanate and polymers.

10. Process according to claim 8 **characterised in that** a bonded joint is produced between layer A) and layer C) by decrystallising the layer B) dried in step iii) by heating it briefly, preferably for less than five minutes at T> 65°C, preferably at a temperature of 80°C<T<110°C, and joining it in the decrystallised state to layer B).

11. Use of storage-stable, latently reactive adhesives for producing identification documents.

## Revendications

1. Document d'identification comprenant des couches A), B) et C), A) étant un thermoplastique, B) étant une couche fabriquée à partir d'un adhésif présentant une réactivité latente, qui est stable au stockage à +2 °C pendant au moins 6 mois, et C) étant un thermoplastique, **caractérisé en ce que** l'adhésif comprend une dispersion aqueuse qui contient un di- ou polyisocyanate ayant une température de fusion ou de ramollissement > 30 °C et un polymère réactif avec les isocyanates, le polymère réactif avec les isocyanates étant un polyuréthane qui est formé par des chaînes polymères cristallisantes, qui décristallisent partiellement ou complètement à des températures inférieures à +110 °C lors d'une mesure par ATM.

2. Document d'identification selon la revendication 1, **caractérisé en ce que** le polymère réactif avec les isocyanates est un polyuréthane qui est formé par des chaînes polymères cristallisantes, qui décristallisent partiellement ou complètement à des températures inférieures à +90 °C lors d'une mesure par ATM.

3. Document d'identification selon la revendication 1, **caractérisé en ce que** le di- ou polyisocyanate est choisi dans le groupe constitué par un produit de dimérisation, un produit de trimérisation et des dérivés d'urée du TDI ou de l'IPDI.

4. Document d'identification selon la revendication 1, **caractérisé en ce que** les thermoplastiques de la couche A) et de la couche C) sont choisis indépendamment l'un de l'autre dans le groupe constitué par le polycarbonate, le polyméthacrylate de méthyle (PMMA), les poly- ou copolymères contenant du styrène, tels que par exemple et de préférence le polystyrène transparent (PS) ou le polystyrène-acrylonitrile (SAN), les polyuréthanes thermoplastiques transparents, ainsi que les polyoléfines, telles que par exemple et de préférence les types de polypropylène transparents ou les polyoléfines à base d'oléfines cycliques (p. ex. TOPAS®, Topas Advanced Polymers), les poly- ou copolycondensats de l'acide téréphtalique, tels que par exemple et de préférence le poly- ou copolyéthylène téréphtalate (PET ou co-PET) ou le PET modifié par du glycol (PETG), le polyéthylène glycol naphténate (PEN), les polysulfones transparentes (PSU).

5. Document d'identification selon la revendication 1, **caractérisé en ce que** les thermoplastiques de la couche A) et de la couche C) sont choisis indépendamment l'un de l'autre dans le groupe constitué par le polycarbonate, les poly- ou copolycondensats de l'acide téréphtalique, tels que par exemple et de préférence le poly- ou copolyéthylène téréphtalate (PET ou co-PET) ou le PET modifié par du glycol (PETG).

6. Document d'identification selon la revendication 1, **caractérisé en ce qu'**il comprend un composant électronique.

7. Document d'identification selon la revendication 1, **caractérisé en ce que** le composant électronique est un circuit intégré.

8. Procédé de fabrication d'un document d'identification selon la revendication 1, comprenant les étapes suivantes :
i) le mélange d'une dispersion ou solution essentiellement aqueuse comprenant un polymère réactif avec les isocyanates avec un di- ou polyisocyanate désactivé en surface suspendu dans de l'eau, le di- ou polyisocyanate présentant une température de fusion ou de ramollissement > 30 °C et le polymère réactif avec les isocyanates étant un polyuréthane qui est formé par des chaînes polymères cristallisantes, qui décristallisent partiellement ou complètement à des températures inférieures à +110 °C lors d'une mesure par ATM ;
ii) l'application du mélange fabriqué en i) sur une couche A) ;
iii) l'élimination de l'eau du mélange fabriqué en i) à une température inférieure à la température de réaction du di- ou polyisocyanate avec formation d'une couche B) ;
iv) l'application d'une couche C) sur la couche B) fabriquée à l'étape iii).

9. Procédé selon la revendication 8, **caractérisé en ce que** l'eau est éliminée à une température inférieure à la température de réaction du polyisocyanate, de telle sorte que les couches essentiellement sèches et solides ainsi obtenues présentent une réactivité latente à des températures inférieures à la température de réaction du polyisocyanate et des polymères.

10. Procédé selon la revendication 8, **caractérisé en ce qu'**une liaison par adhésion entre la couche A) et la couche C) est formée, par décristallisation de la couche B) séchée à l'étape iii) par un chauffage de courte durée, de préférence durant moins de 5 minutes, à T > 65 °C, de préférence à une température de 80 °C < T < 110 °C, et liaison avec la couche B) à l'état décristallisé.

11. Utilisation d'adhésifs présentant une réactivité latente, stables au stockage, pour la fabrication de documents d'identification.
